# EUROPÄISCHE PATENTSCHRIFT

(11) **EP 3 384 191 B1**
(45) Veröffentlichungstag und Bekanntmachung des Hinweises auf die Patenterteilung: **30.10.2019**
(21) Anmeldenummer: 16801135.1
(22) Anmeldetag: 23.11.2016
(51) Int. Cl.: F16K 31/54, F16K 31/04, F16K 11/07, F15B 13/044, F16K 31/53

(54) **VENTILVORRICHTUNG**
VALVE DEVICE
DISPOSITIF FORMANT VANNE

(30) Priorität: 03.12.2015 DE 102015015685
(43) Veröffentlichungstag der Anmeldung: 10.10.2018
(73) Patentinhaber: Hydac Systems & Services GmbH, 66280 Sulzbach (DE)
(72) Erfinder: BIWERSI, Sascha, Alexander, 66693 Mettlach (DE); SCHMITT, Stephan, 66386 St. Ingbert (DE)
(74) Vertreter: Bartels, Martin Erich Arthur
(86) Internationale Anmeldenummer: PCT/EP2016/001974
(87) Internationale Veröffentlichungsnummer: WO 2017/092855

(56) Entgegenhaltungen:
- DE-A1-102013 021 317
- JP-A- S63 219 906
- US-A- 5 263 681
- US-A1- 2008 312 025

## Beschreibung

Die Erfindung betrifft eine Ventilvorrichtung mit den Merkmalen im Oberbegriff von Anspruch 1.

Das Ventilgehäuse besteht dabei regelmäßig aus paarweise einander gegenüberliegenden Längs- sowie Stirnseiten und einer Ober- und einer Unterseite.

Die elektromotorische Betätigung von Ventilvorrichtungen ist bekannt. Dieses Funktionsprinzip bietet zahlreiche Vorteile gegenüber hydraulischen Aktuatoren. Bei Serienanwendungen, wenn Ventilvorrichtungen in einem hydraulischen Wegeventilblock mit einer Mehrzahl von nebeneinander angeordneten Steuerventilsegmenten für Steuersysteme von mobilen Arbeitsmaschinen, insbesondere von Landmaschinen, zum Einsatz kommen, ist für die einzelnen Ventilsegmente eine besonders schmale Bauweise anzustreben, um die Gesamtbreite des Wegeventilblocks in annehmbaren und für die jeweilige Einbausituation geeigneten Grenzen zu halten.

Das Dokument US 7 591 448 B2 offenbart eine elektromotorisch betätigbare Ventilvorrichtung der eingangs genannten Gattung, die für Serienanwendungen, also für Ventilblöcke mit nebeneinander liegenden Steuerventilen, vorgesehen ist. Um eine für die Serienanwendung ausreichend schmale Bauweise der Einzelsegmente zu erreichen, ist bei dieser Lösung ein Innenläufer-Schrittmotor vorgesehen, dessen Drehachse in Richtung der Längsverkettung des betreffenden Ventilblocks verläuft. Um eine schlanke Bauweise mit der bei Serienanwendungen üblichen Segmentbreite von weniger als 44 mm zu erhalten, ist eine schmale Bauform des Schrittmotors mit geringer, in Richtung der Drehachse gemessener Breite erforderlich, die in dem genannten Dokument mit H angegeben ist. Bei der geringen Effizienz und Leistungsdichte von Schrittmotoren, steht nur ein sehr kleines Drehmoment zur Verfügung, selbst wenn der Motordurchmesser, der in dem erwähnten Dokument mit D bezeichnet ist, im Verhältnis zur axialen Breite H entsprechend groß gewählt ist. Die bekannte Lösung sieht hierfür ein Verhältnis von D/H von mehr als 1,6 vor. Das geringe, zur Verfügung stehende Drehmoment bedingt eine starke Untersetzung, wodurch der Aktuator bei sehr hohem Rückstellmoment langsam arbeitet, so dass er für einen Einsatz bei Mobilventilen ungeeignet ist. Zudem hat der Schrittmotor aufgrund seines Rastmoments eine hohe Selbsthemmung, was es erschwert, die Ventilvorrichtung mit einer funktional sicheren, federzentrierten Mittelstellung zu versehen.

Durch die EP 2 916 052 A1 ist eine Ventilscheibe mit einem Grundkörper bekannt, der aus paarweise einander gegenüberliegenden Längs- sowie Stirnseiten und einer Ober- und einer Unterseite gebildet ist und in dem ein Steuerschieber oder Ventilkolben längsverfahrbar aufgenommen ist. Ferner weist die bekannte Lösung ein mit einem Elektromotor antreibbares Zahnradgetriebe auf, das eine mit dem Steuerschieber oder Ventilkolben verbundene Zahnstange antreibt, die über eine biegeelastische Koppelstange fest mit dem Steuerschieber oder Ventilkolben verbunden ist. Sowohl der Elektromotor als auch das Zahnradgetriebe mit der Zahnstange sind stirnseitig an das Gehäuse der Ventilscheibe angeflanscht, um dergestalt einen schmalen Aufbau für die Ventilscheibe zu erreichen zwecks Aufbau dahingehender Ventilscheiben zu Komplett-Ventilblöcken. Die dahingehend bekannte Ventilvorrichtung baut demgemäß in Längsrichtung parallel zu ihren Längsseiten gesehen groß auf, und um eine leichte Verschiebbarkeit des Steuerschiebers oder Ventilkolbens über die Zahnstange zu erreichen, ist die biegeelastische Koppelstange dazwischen vorzusehen, was zu einem erhöhten Aufwand auch bei der Montage führt.

Die US 5 263 681 beschreibt eine Ventilvorrichtung mit den Merkmalen im Oberbegriff von Anspruch 1, bestehend aus mindestens einem in einem Ventilgehäuse mittels eines Elektromotors entlang einer Verfahrachse längsverfahrbar angeordneten Ventilkolben, der im Ventilgehäuse angeordnete Fluidanschlussstellen zumindest teilweise miteinander verbindet oder voneinander trennt, wobei die Antriebsachse des Elektromotors die Verfahrachse des Ventilkolbens schneidet.

Eine weitere Ventilvorrichtung geht aus der JP S63-219906 hervor.

Ausgehend von diesem Stand der Technik stellt sich die Erfindung die Aufgabe, eine Ventilvorrichtung zur Verfügung zu stellen, die sich durch ein besonders günstiges Betriebsverhalten auszeichnet, konstruktiv klein aufbaut und kostengünstig in der Realisierung ist.

Erfindungsgemäß ist diese Aufgabe durch eine Ventilvorrichtung gelöst, die die Merkmale des Patentanspruches 1 in seiner Gesamtheit aufweist.

Gemäß dem kennzeichnenden Teil des Anspruchs 1 zeichnet sich die dahingehende Erfindung dadurch aus, dass der Ventilkolben an seinem einen freien Ende eine Zahnstange aufweist, die mit einem Antriebsritzel eines an den Elektromotor angeschlossenen Getriebes kämmt, dass der als Aktuator dienende Elektromotor am Gehäuseendteil derart angeordnet ist, dass zumindest die Zahnstange des Ventilkolbens sowie das Antriebsritzel des an den Elektromotor angeschlossenen Getriebes unter Öl in einer an das Ventilgehäuse angeschlossenen und gegenüber diesem Gehäuse abgedichteten Kammer betreibbar sind und dass eine Abdichtung gegenüber dem Motorgehäuse des Elektromotors durch eine zur Antriebsachse radiale Rotationsdichtung gebildet ist.

Es ist ferner vorgesehen, dass die Antriebsachse des Elektromotors oder deren fiktive Verlängerung die Verfahrachse des Ventilkolbens schneidet. Bei dieser Motoranordnung lässt sich eine schmale Bauweise realisieren, ohne dass das Prinzip des Schrittmotors genutzt werden müsste, vielmehr lassen sich mit Vorteil elektronisch geregelte Elektromotoren einsetzen. Die bei Schrittmotoren gegebenen Nachteile des geringen dynamischen Drehmoments, der starken, erforderlichen Untersetzung mit entsprechend starker Selbsthemmung, kommen dadurch in Wegfall. Insbesondere steht bei einer dahingehenden Anordnung vorzugsweise das Motorgehäuse seitlich nicht über das Ventilgehäuse vor, so dass eine schmale Segment-Bauweise erreicht ist, was eine Rolle spielt, wenn eine Vielzahl solcher Ventile in Nebeneinanderanordnung an Drittbauteilen, wie Bauteilen von Arbeitsmaschinen und Nutzfahrzeugen, anzubringen sind.

Die Erfindung zeichnet sich ferner dadurch aus, dass die Antriebsachse des Elektromotors die Ober- oder Unterseite des Ventilgehäuses oder deren jeweilige fiktive Verlängerung durchgreift oder dass die Antriebsachse des Elektromotors oder deren fiktive Verlängerung parallel oder schräg verlaufend zu den Fluidanschlussstellen im Ventilgehäuse angeordnet ist, soweit diese aus dem Ventilgehäuse auf dessen Ober- und/oder Unterseite austreten. Hierdurch ist es möglich, im Gegensatz zum Stand der Technik nach der EP 2 916 052 A1 die Antriebseinheit für den Ventilkolben von dem vorderen stirnseitigen Bereich, an dem die bekannte Antriebseinheit weit vorsteht, bevorzugt auf die Oberseite der Ventilvorrichtung zu setzen, was nicht nur platzsparend ist, sondern auch einen Direktantrieb für den Ventilkolben ohne Zwischenschalten biegeelastischer Koppelstangen oder dergleichen ermöglicht. Dies hat so keine Entsprechung im Stand der Technik, insbesondere kommt es nicht zur Selbsthemmung im Antriebsstrang für den Ventilkolben. Sofern die Antriebsvorrichtung, insbesondere in Form des Elektromotors auf der Oberseite des Ventilgehäuses oder Teilen dieses Ventilgehäuses aufgesetzt ist, kann in platzsparender und den Segmentaufbau unterstützender Weise Teile einer Nothandbetätigung auf der Unterseite des Ventilgehäuses oder Teilen desselben hervortreten.

Die Längsseiten des jeweiligen Ventilgehäuses bilden in ihrer fiktiven Verlängerung parallel zueinander verlaufende Begrenzungsebenen aus, zwischen denen die möglichen Ebenen mit der Verfahrachse liegen, die von der Motor-Antriebsachse respektive deren fiktiver Verlängerung geschnitten werden. Vorzugsweise schneidet die Motor-Antriebsachse die Verfahrachse des Ventilkolbens senkrecht. Es besteht aber auch die Möglichkeit eines sogenannten Quereingriffs, sofern anstelle eines Zahnradritzels-Zahnstangeneingriffs eine Schnecken- oder sonstige hierfür geeignete Getriebeanordnung zum Einsatz kommt, auch wenn solche Getriebe selbsthemmend sein sollten.

Anders als bei der erwähnten bekannten Lösung nach dem US-Patent kann bei dem einen Rotor und einen Stator aufweisenden Elektromotor das Verhältnis D zu H eines durchschnittlichen Durchmessers D eines fiktiven Kreises durch die Mittelpunkte der Statorspulen, geteilt durch eine Gesamthöhe H der Spulen in einer Richtung parallel zur Antriebsachse des Rotors, kleiner als 1,5, vorzugsweise kleiner als 1, sein. Im Vergleich zum Stand der Technik ist die erfindungsgemäße Ventilvorrichtung dadurch konstruktiv freier gestaltbar.

In Segmentbauweise kann eine vorgebbare Anzahl von Ventilgehäusen in Nebeneinanderanordnung mit auf ihnen aufgesetzten Elektromotoren vorgesehen sein, wobei die Elektromotoren in Richtung der Nebeneinanderanordnung innerhalb der Grenzen der jeweiligen Ventilgehäuse angeordnet sind.

Eine derartige Nebeneinanderanordnung lässt sich in vorteilhafter Weise durch jeweils eingesetzte Elektromotoren in Form permanenterregter Innenläufer-Synchronmaschinen realisieren.

Die Anordnung kann hierbei mit Vorteil so getroffen sein, dass der jeweilige Motor über einen digitalen Controller mit absoluter Drehpositionserkennung gesteuert ist.

Als Getriebe kann mit Vorteil ein Stirnradgetriebe oder ein ein- oder mehrstufiges, insbesondere zweistufiges Planetenradgetriebe vorgesehen sein. Dabei kann die Anordnung so getroffen sein, dass im Bereich der Zahnstange sich an den Ventilkolben eine vorzugsweise von Hand betätigbare Notbetätigung anschließt.

Erfindungsgemäß sind zumindest die Zahnstange des Ventilkolbens sowie das Antriebsritzel des Elektromotors oder etwaig an diesem Motor angeschlossene Getriebe unter Öl in einer an das Ventilgehäuse angeschlossenen und gegenüber diesem Gehäuse abgedichteten Kammer betreibbar, die auch Bestandteil des Ventilgehäuses sein kann. Eine derartige Bauweise zeichnet sich durch eine besonders hohe Betriebssicherheit im Langzeitbetrieb aus.

Hinsichtlich der Ausbildung des zugeordneten Wegeventils kann die Anordnung mit Vorteil so getroffen sein, dass am anderen, der Zahnstange abgekehrten Ende der Ventilkolben mittels einer Rückstelleinrichtung, vorzugsweise unter Einsatz einer Druckfeder, bei unbetätigtem Elektromotor in eine Neutralstellung zurückgeholt ist.

Dabei kann die Anordnung so getroffen sein, dass in der Neutralstellung ein Druckversorgungsanschluss von zwei Nutzanschlüssen getrennt ist und dass in gegenüberliegenden Verfahrstellungen, hervorgerufen durch den betätigten Elektromotor, der Ventilkolben einmal den einen und einmal den anderen Nutzanschluss mit dem Druckversorgungsanschluss verbindet.

Nachstehend ist die Erfindung anhand eines in der Zeichnung dargestellten Ausführungsbeispiels im Einzelnen erläutert. Es zeigen:
- Fig. 1: einen abgebrochenen, die Ventilgehäuseanordnung nur teilweise zeigenden Längsschnitt eines Ausführungsbeispieles der erfindungsgemäßen Ventilvorrichtung;
- Fig. 2: einen gegenüber Fig. 1 in größerem Maßstab gezeichneten Teillängsschnitt lediglich des Betätigungsteiles des Ausführungsbeispieles; und
- Fig. 3: eine Schnittdarstellung entsprechend der Schnittlinie III-III von Fig. 2.

Unter Bezug auf die Zeichnung wird die erfindungsgemäße Ventilvorrichtung am Beispiel eines LS-Wegeventils in Form eines Schieberventils erläutert. Die Bauweise des Ventilgehäuses mit dem zugehörigen Schieberkolben entspricht bei dem in den Figuren gezeigten Ausführungsbeispiel der bekannten Ventilvorrichtung, wie sie im Dokument DE 10 2013 021 317 A1 offenbart ist, worauf Bezug genommen wird. Der Unterschied der Erfindung demgegenüber besteht darin, dass ein elektromotorischer Aktuator vorgesehen ist, dessen Bauweise einen besonders vorteilhaften Einsatz der erfindungsgemäßen Ventilvorrichtung für Serienanwendungen bei Ventilblöcken mit eng nebeneinander angeordneten Ventilvorrichtungen ermöglicht. Sofern in der Patentanmeldung die Begriffe "Oberseite" und "Unterseite" verwendet werden, beziehen sich diese Angaben auf eine normale Einbaulage, wie sie in den Figuren dargestellt ist.

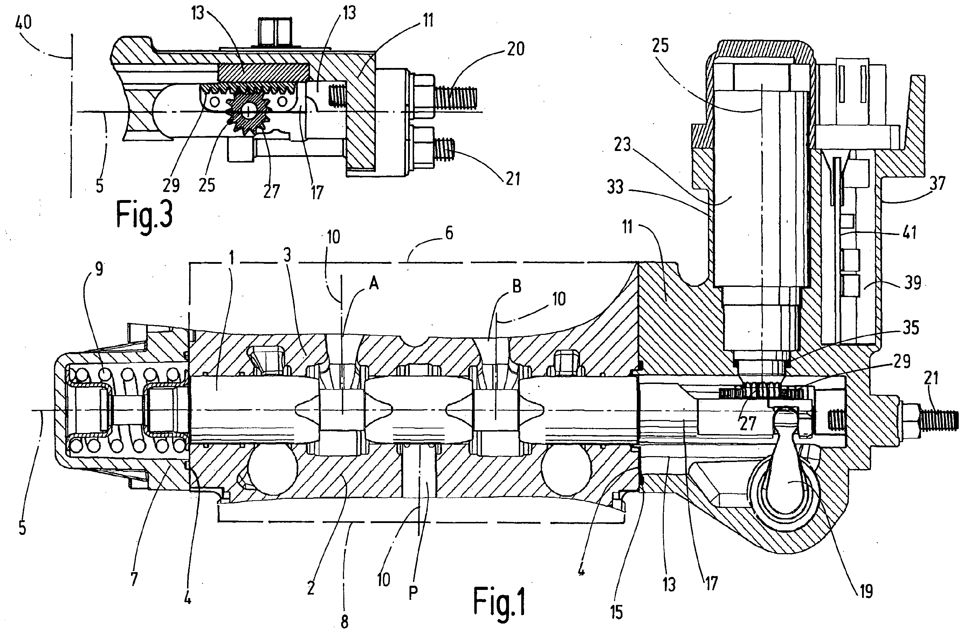

In Entsprechung zu der im genannten Dokument offenbarten Lösung ist ein Schieberkolben 1 in einem Ventilgehäuse 3 entlang einer Achse 5 verfahrbar. Das Ventilgehäuse 3 weist paarweise einander gegenüberliegende Längsseiten 2 und Stirnseiten 4 auf. Ferner verfügt das Ventilgehäuse 3 über eine Oberseite 6 und eine Unterseite 8. Gemäß der Darstellung nach der Fig. 1 sind die dahingehenden Gehäusewandungen strichliniert nur von ihrer jeweiligen Umrisslinie dargestellt. Es versteht sich, dass in jeweils fiktiver Verlängerung die dahingehenden Seiten in Ebenen planparallel verlaufend in alle Richtungen vorstehen können. Am Ventilgehäuse 3 befinden sich weiter wie bei derartigen Ventilvorrichtungen üblich Gehäuseanschlüsse, wie ein Druckversorgungsanschluss P und zwei Nutzanschlüsse A und B. Die regelmäßig in Form von Bohrungen im Ventilgehäuse 3 eingebrachten Anschlüsse P, A, B weisen jeweils strichliniert wiedergegebene Längsachsen 10 auf. Weitere Anschlüsse, wie Tank-Rücklaufanschlüsse oder Anschlüsse z. B. für eine Druckwaage, sind in Fig. 1 nicht beziffert.

Eine im Gehäuseendbereich 7 befindliche Federanordnung 9 gibt in der bei derartigen Wegeventilen üblicher Weise für den Schieberkolben 1 eine Neutral- oder Mittelstellung vor, wie sie der Schieberkolben 1 in Fig. 1 einnimmt. An dem dem Gehäuseendbereich 7 entgegengesetzten, in Fig. 1 rechtsseitig gelegenen Ende schließt sich an das Ventilgehäuse 3 ein Gehäuseendteil 11 an, das eine sich zur Achse 5 koaxial erstreckende innere Kammer 13 enthält, die gegenüber dem Ventilgehäuse 3 über eine Dichtung 15 abgedichtet ist, jedoch als Bestandteil des Ventilgehäuses 3 anzusehen ist. In Entsprechung zu der aus dem erwähnten Dokument DE 10 2013 021 317 A1 bekannten Ventilvorrichtung erstreckt sich der Schieberkolben 1 mit einem Endabschnitt 17 in die Kammer 13. In ebenfalls der genannten bekannten Lösung entsprechender Weise wirkt der Schieber-Endabschnitt 17 innerhalb der Kammer 13 mit einem Betätigungsteil 19 einer Notbetätigung sowie einer Hublängenbegrenzung des Schieberkolbens 1 zusammen. Da diese ebenfalls der aus dem erwähnten Dokument bekannten Lösung mit Stellschrauben 20 und 21 entspricht, erübrigt sich diesbezüglich eine nähere Beschreibung.

Der als Aktuator dienende Elektromotor 23 ist am Gehäuseendteil 11 derart angeordnet, dass seine Antriebsachse 25 die Verfahrachse 5 des Schieberkolbens 1 senkrecht schneidet und sich ein am Ende der Motorwelle befindliches Zahnritzel 27 innerhalb der Kammer 13 befindet. Wie am deutlichsten die Fig. 3 zeigt, ist am Endabschnitt 17 des Schieberkolbens 1 eine Zahnstange 29 befestigt, mit der das Ritzel 27 kämmt. Wie bei der erwähnten bekannten Lösung ist der Schieberkolben 1 in der Kammer 13 unverdrehbar geführt, so dass die Zahnstange 29 bei durch das Ritzel 27 bewirkten Axialbewegungen in Anlage an einem führenden Gleitelement 31 verbleibt, das, s. Fig. 3, an der Wand der Kammer 13 befestigt ist. Die nach außen hin abgedichtete Kammer 13 steht vom Ventilgehäuse 3 her unter Öl, so dass die von Ritzel 27, Zahnstange 29 und Gleitelement 31 gebildete Getriebeanordnung unter Öl läuft. Dabei ist die Abdichtung gegenüber dem Motorgehäuse 33 des Elektromotors 23 durch eine zur Antriebsachse 25 radiale Rotationsdichtung 35 gebildet. Anstelle des gezeigten Gleitelementes 31 könnte auch ein Wälzlager oder eine Rolle eingesetzt sein.

Beim gezeigten Ausführungsbeispiel ist ein Elektromotor 23 in Form eines permanenterregten Innenläufer-Synchronmotors vorgesehen. Bei einem Abmessungsverhältnis von D zu H von wesentlich weniger als 1,5 und vorzugsweise von weniger als 1 stellt ein permanent erregter Synchronmotor bei einer schlanken Bauweise, die eine enge Nebeneinanderanordnung von Ventilvorrichtungen in Ventilblöcken ermöglicht, ein eine schnelle und sichere Ventilbetätigung ermöglichendes Drehmoment zur Verfügung. Der Antrieb kann über einen Direktantrieb durch Ritzel 27 und Zahnstange 29 erfolgen. Zusätzlich zu einem derartigen Stirnradgetriebe könnte auch ein mehrstufiges, insbesondere zweistufiges, Planetenradgetriebe oder ein exzentrisches Stirnradgetriebe vorgesehen sein. Die geringe oder nicht vorhandene Selbsthemmung des Antriebes mit permanent erregtem Synchronmotor ermöglicht eine einfache Bauweise einer Nothandbetätigung.

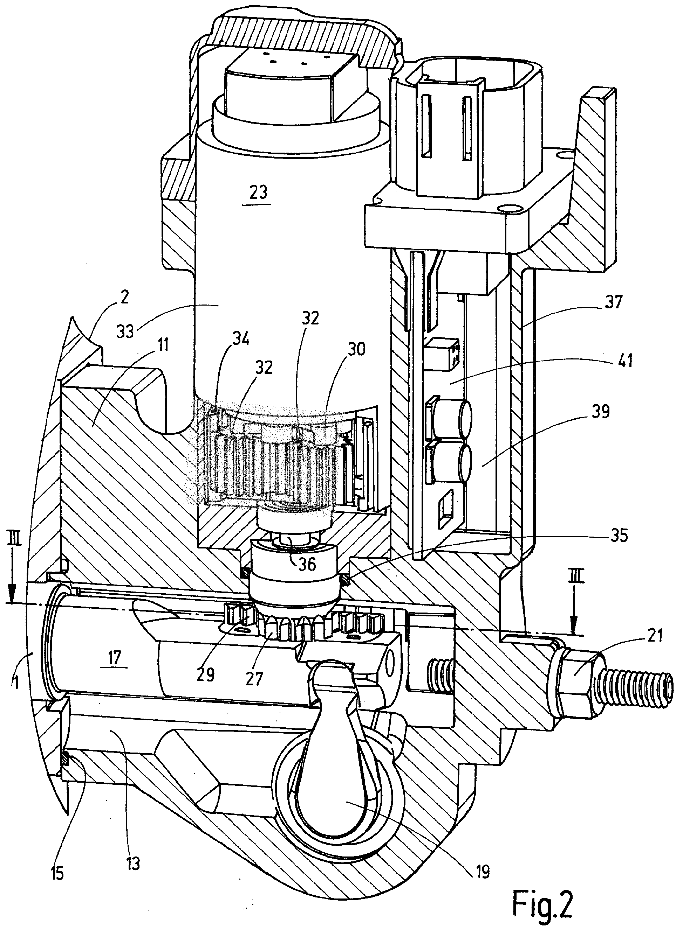

Wie insbesondere die Fig. 2 zeigt, ist für den Antrieb des Ritzels 27 ein Planetenradgetriebe 30 eingesetzt. Um ein zentrales, nicht näher dargestelltes Sonnenrad kämmen die einzelnen Planetenräder 32, die auf ihrer Außenumfangsseite oder Abtriebsseite in Eingriff mit einem Zentralrad 34 innerhalb des Motorgehäuses 33 sind, das wiederum über einen Stangenverbindungstrieb 36 mit dem anzutreibenden Zahnritzel 27 verbunden ist. Das nicht näher dargestellte Sonnenrad des Planetenradgetriebes 30 wird wiederum von dem Elektromotor 23 entlang dessen Antriebsachse 25 (s. Fig. 1) angesteuert respektive angetrieben. Wie die Fig. 1 weiter zeigt, durchgreift die dahingehende Antriebsachse 25 respektive das Motorgehäuse 33 die fiktive Verlängerung der Oberseite 6 des Ventilgehäuses 3. Ferner ist die dahingehende Antriebsachse 25 des Elektromotors 23 parallel zu den Längsachsen 10 der Fluidanschlüsse P, A, B ausgerichtet.

Für die Steuerung des Motors 23 ist ein Elektronikgehäuse 37 an das Motorgehäuse 33 angegossen und bildet eine gegenüber dem Motorgehäuse 33 abgedichtete Kavität 39, in der eine Elektronikplatine 41 aufgenommen ist. Sowohl die Kavität 39 des Elektronikgehäuses 37 als auch das Motorgehäuse 33 sind voneinander unabhängig gekapselt und gegen Feuchtigkeit von außen abgedichtet. Die Platine 41 kann einen digitalen Controller aufweisen, der die Drehposition des Motors 23 erkennt, beispielsweise durch eine sensorlose Positionsmessung (Rotorlagebestimmung durch die Motorwicklung). Die Ansteuerung kann über einen CAN BUS oder ein analoges Eingangssignal erfolgen.

Wie die Fig. 3 zeigt, ist das Zahnritzel 27 in der Kammer 13 zentral angeordnet, so dass die Antriebsachse 25 des Elektromotors 23 die Verfahrachse 5 senkrecht schneidet. Für den Durchmesser des runden Motorgehäuses 23 in Richtung der Nebeneinanderanordnung in einem Ventilblock steht dadurch die gesamte Breite der jeweiligen Ventilvorrichtung zur Verfügung. Bei entsprechend geringerem Durchmesser des Elektromotors 23 und des Motorgehäuses 33 wäre auch eine seitliche Versetzung der Antriebsachse 25 von der Verfahrachse 5, beispielsweise in Richtung der in Fig. 3 gezeigten Achse 40, möglich, die senkrecht auf der Verfahrachse 5 steht, wobei die Antriebsachse 25, die die Verfahrachse 5 enthaltende Ebene nach wie vor senkrecht schneiden würde.

## Patentansprüche

1. Ventilvorrichtung, bestehend aus mindestens einem in einem Ventilgehäuse (3) mittels eines Elektromotors (23) entlang einer Verfahrachse (5) längsverfahrbar angeordneten Ventilkolben (1), der im Ventilgehäuse (3) angeordnete Fluidanschlussstellen (P, A, B) zumindest teilweise miteinander verbindet oder voneinander trennt, wobei die Antriebsachse (25) des Elektromotors (23) die Verfahrachse (5) des Ventilkolbens (1) schneidet, **dadurch gekennzeichnet,**
**dass** der Ventilkolben (1) an seinem einen freien Ende eine Zahnstange (29) aufweist, die mit einem Antriebsritzel (27) eines an den Elektromotor (23) angeschlossenen Getriebes kämmt;
**dass** zumindest die Zahnstange (29) des Ventilkolbens (1) sowie das Antriebsritzel (27) des an den Elektromotor (23) angeschlossenen Getriebes unter Öl in einer an das Ventilgehäuse (3) angeschlossenen und gegenüber diesem Gehäuse (3) abgedichteten Kammer (13) betreibbar sind; und
**dass** eine Abdichtung gegenüber dem Motorgehäuse (33) des Elektromotors (23) durch eine zur Antriebsachse (25) radiale Rotationsdichtung (35) gebildet ist.

2. Ventilvorrichtung nach einem der vorstehenden Ansprüche, **dadurch gekennzeichnet, dass** der Elektromotor (23) einen Rotor und einen Stator aufweist und dass das Verhältnis D zu H eines durchschnittlichen Durchmessers D eines fiktiven Kreises durch die Mittelpunkte der Statorspulen, geteilt durch eine Gesamthöhe H der Spulen in einer Richtung parallel zur Antriebsachse (25) des Rotors, kleiner als 1,5, vorzugsweise kleiner als 1, ist.

3. Ventilvorrichtung nach einem der vorstehenden Ansprüche, **dadurch gekennzeichnet, dass** in Segmentbauweise eine vorgebbare Anzahl von Ventilgehäusen (3) entlang ihrer Längsseiten in Nebeneinanderanordnung mit auf ihnen aufgesetzten Elektromotoren (23) vorgesehen ist und dass die Elektromotoren (23) in Richtung der Nebeneinanderanordnung innerhalb der Längsseiten des jeweiligen zuordenbaren Ventilgehäuses (3) angeordnet sind.

4. Ventilvorrichtung nach einem der vorstehenden Ansprüche, **dadurch gekennzeichnet, dass** der jeweils eingesetzte Elektromotor (23) eine permanenterregte Innenläufer-Synchronmaschine ist.

5. Ventilvorrichtung nach einem der vorstehenden Ansprüche, **dadurch gekennzeichnet, dass** das Getriebe ein Stirnradgetriebe (27, 29) oder ein ein- oder mehrstufiges, insbesondere zweistufiges Planetenradgetriebe ist.

6. Ventilvorrichtung nach einem der vorstehenden Ansprüche, **dadurch gekennzeichnet, dass** im Bereich der Zahnstange (29) sich an den Ventilkolben (1) eine vorzugsweise von Hand betätigbare Notbetätigung (19) anschließt.

7. Ventilvorrichtung nach einem der vorstehenden Ansprüche, **dadurch gekennzeichnet, dass** am anderen, der Zahnstange (29) abgekehrten Ende (7) der Ventilkolben (1) mittels einer Rückstelleinrichtung, vorzugsweise unter Einsatz einer Druckfeder (9), bei unbetätigtem Elektromotor (23) in eine Neutralstellung zurückgeholt ist.

8. Ventilvorrichtung nach einem der vorstehenden Ansprüche, **dadurch gekennzeichnet, dass** in der Neutralstellung ein Druckversorgungsanschluss (P) von zwei Nutzanschlüssen (A, B) getrennt ist und dass in gegenüberliegenden Verfahrstellungen, hervorgerufen durch den betätigten Elektromotor (23), der Ventilkolben (1) einmal den einen (A) und einmal den anderen (B) Nutzanschluss mit dem Druckversorgungsanschluss (P) verbindet.

## Claims

1. Valve device, consisting of at least one valve piston (1) which is arranged in a valve housing (3) in such a way as to be longitudinally movable along a travel axis (5) by an electric motor (23), and which at least partially connects or disconnects fluid connection points (P, A, B) arranged in the valve housing (3) to or from each other,
wherein the drive axis (25) of the electric motor (23) intersects the travel axis (5) of the valve piston (1), **characterised in that** the valve piston (1) has at its one free end a toothed rack (29) which meshes with a drive pinion (27) of a gear connected to the electric motor (23);
that at least the toothed rack (29) of the valve piston (1) and the drive pinion (27) of the gear connected to the electric motor (23) can be operated under oil in a chamber (13) which is connected to the valve housing (3) and sealed with respect to this housing (3); and
that a seal is formed with respect to the motor housing (33) of the electric motor (23) by a rotary seal (35) which is radial to the drive axis (25).

2. Valve device according to one of the preceding claims, **characterised in that** the electric motor (23) has a rotor and a stator and that the ratio D to H of an average diameter D of a notional circle through the centre points of the stator coils, divided by a total height H of the coils in a direction parallel to the drive axis (25) of the rotor, is less than 1.5, preferably less than 1.

3. Valve device according to one of the preceding claims, **characterised in that** a predefinable number of valve housings (3) in segmented design is provided along their longitudinal sides in a side by side arrangement with electric motors (23) mounted thereon and that the electric motors (23) are arranged in the direction of the side by side arrangement within the longitudinal sides of the respective assignable valve housing (3).

4. Valve device according to one of the preceding claims, **characterised in that** the electric motor (23) used in each case is a synchronous machine with permanently-excited internal rotor.

5. Valve device according to one of the preceding claims, **characterised in that** the gear is a spur gear (27, 29) or a single-stage or multi-stage, in particular a two-stage, planetary gear.

6. Valve device according to one of the preceding claims, **characterised in that** an emergency override (19), preferably operable by hand, connects to the valve piston (1) in the region of the toothed rack (29).

7. Valve device according to one of the preceding claims, **characterised in that** at the other end (7), remote from the toothed rack (29), the valve piston (1) is returned to a neutral position by means of a resetting device, preferably using a compression spring (9), when the electric motor (23) is not actuated.

8. Valve device according to one of the preceding claims, **characterised in that**, in the neutral position, a pressure supply connection (P) is disconnected from two service connections (A, B) and that in opposing travel positions, brought about by the actuated electric motor (23), the valve piston (1) connects first the one (A) and then the other (B) service connection to the pressure supply connection (P).

## Revendications

1. Dispositif formant vanne, constitué d'au moins un piston (1) de vanne, qui est disposé, en pouvant se déplacer longitudinalement suivant un axe (5) de déplacement au moyen d'un moteur (23) électrique, dans un corps (3) de vanne et qui met en communication entre eux, au moins en partie, ou les sépare les uns des autres des points (P, A, B) de raccord de fluide disposés dans le corps (3) de la vanne, l'axe (25) d'entraînement du moteur (23) électrique coupant l'axe (5) de déplacement du piston (1) de la vanne, **caractérisé en ce que** le piston (1) de la vanne a, à l'une de ses extrémités libres, une crémaillère (29), qui engrène dans un pignon (27) d'entraînement d'une transmission raccordée au moteur (23) électrique ;
**en ce qu'**au moins la crémaillère (29) du piston (1) de la vanne, ainsi que le pignon (27) d'entraînement de la transmission raccordée au moteur (23) électrique, peuvent fonctionner sous huile dans une chambre (13) raccordée au corps (3) de la vanne et rendue étanche par rapport à ce corps (3) ; et
**en ce qu'**une étanchéité, par rapport au carter (33) du moteur (23) électrique, est formée par un joint (35) de rotation radial à l'axe (25) d'entraînement.

2. Dispositif formant vanne suivant l'une des revendications précédentes, **caractérisé en ce que** le moteur (23) électrique a un rotor et un stator et **en ce que** le rapport de D à H d'un diamètre D moyen d'un cercle fictif passant par les centres des bobines du stator, divisé par une hauteur H d'ensemble des bobines, dans une direction parallèle à l'axe (25) d'entraînement du rotor, est plus petit que 1,5, de préférence plus petit que 1.

3. Dispositif formant vanne suivant l'une des revendications précédentes, **caractérisé en ce que**, dans le mode de construction segmenté, il est prévu un nombre pouvant être donné à l'avance de corps (3) de vanne mis les uns à côté des autres le long de leurs côtés longitudinaux, avec des moteurs (23) électriques qui y sont mis et **en ce que** les moteurs (23) électriques sont disposés dans la direction du montage les uns à côté des autres à l'intérieur des côtés longitudinaux du corps (3) de la vanne, qui peut être associé, respectivement.

4. Dispositif formant vanne suivant l'une des revendications précédentes, **caractérisé en ce que** le moteur (23) électrique utilisé, respectivement, est une machine synchrone à rotor intérieur à excitation permanente.

5. Dispositif formant vanne suivant l'une des revendications précédentes, **caractérisé en ce que** la transmission est un engrenage (27, 29) cylindrique ou un engrenage épicycloïdal à plusieurs étages, notamment à deux étages.

6. Dispositif formant vanne suivant l'une des revendications précédentes, **caractérisé en ce que**, dans la région de la crémaillère (29), un actionnement (19) d'urgence, pouvant être actionné de préférence à la main, se raccorde au piston (1) de la vanne.

7. Dispositif formant vanne suivant l'une des revendications précédentes, **caractérisé en ce qu'**à l'autre extrémité (7), loin de la crémaillère (29), du piston (1) de la vanne, on peut revenir dans une position neutre, lorsque le moteur (23) électrique n'est pas actionné, au moyen d'un dispositif de rappel, de préférence en utilisant un ressort (9) de compression.

8. Dispositif formant vanne suivant l'une des revendications précédentes, **caractérisé en ce que**, dans la position neutre, un raccord (P) d'alimentation en pression est séparé de deux raccords (A, B) utiles, et **en ce que**, dans des positions de déplacement opposées, sous l'effet de l'actionnement du moteur (23) électrique, le piston (1) de la vanne met en communication avec le raccord (P) d'alimentation en pression tantôt l'un (A) et tantôt l'autre (B) raccord utile.
